# EUROPÄISCHE PATENTSCHRIFT

(11) **EP 1 976 736 B1**
(45) Veröffentlichungstag und Bekanntmachung des Hinweises auf die Patenterteilung: **27.01.2010**
(21) Anmeldenummer: 06819516.3
(22) Anmeldetag: 15.11.2006
(51) Int. Cl.: B60S 1/34

(54) **SCHUTZKAPPE FÜR EINE SCHEIBENWISCHERWELLE**
PROTECTIVE CAP FOR A WINDOW WIPER SHAFT
COIFFE DE PROTECTION POUR ARBRE D'ESSUIE-GLACE

(30) Priorität: 28.12.2005 DE 102005062719
(43) Veröffentlichungstag der Anmeldung: 08.10.2008
(73) Patentinhaber: ROBERT BOSCH GMBH, 70442 Stuttgart (DE)
(72) Erfinder: BOHN, Roland, 77815 Buehl (DE)
(86) Internationale Anmeldenummer: PCT/EP2006/068513
(87) Internationale Veröffentlichungsnummer: WO 2007/080008

(56) Entgegenhaltungen:
- DE-A1- 10 331 854
- DE-A1- 10 343 572
- DE-A1- 19 804 135
- FR-A- 2 780 366

## Beschreibung

Die Erfindung betrifft eine Schutzkappe für eine von einem Wischerantrieb angetriebene Wischerwelle einer Scheibenwischanlage, insbesondere einer Heckscheitienwischanlage eines Kraftfahrzeugs, gemäß dem Oberbegriff des Anspruchs 1, sowie einen Wischerantrieb für eine Scheibenwischanlage gemäß dem Oberbegriff des Anspruchs 13.

### Stand der Technik

Heckscheibenwischanlagen von Kraftfahrzeugen umfassen in der Regel als Wischerantrieb einen im Inneren des Kraftfahrzeugs untergebrachten Wischermotor mit einem angeflanschten Untersetzungsgetriebe sowie eine über das Untersetzungsgetriebe vom Wischermotor angetriebene Wischerwelle, die durch eine Montageöffnung in einem unter- oder oberhalb der Heckscheibe angeordneten Karosserieteil oder durch eine Montageöffnung in der Heckscheibe selbst nach außen ragt und an ihrem freien Ende einen auf der Heckscheibe aufliegenden Wischerarm trägt. Um ein Eindringen von Feuchtigkeit entlang der Wischerwelle ins Innere des Kraftfahrzeugs zu verhindern, wird bei augenblicklich von der Anmelderin hergestellten Heckscheibenwischanlagen eine Schutzkappe auf die Wischerwelle aufgeschoben und kraft- und/oder formschlüssig mit einem Getriebegehäuse des Wischerantriebs verbunden. Die Schutzkappe weist eine Durchtrittsöffnung für die Wischerwelle auf und ist mit einer in die Durchtrittsöffnung eingesetzten, gegen die Wischerwelle anliegenden Ringdichtung bestückt. Die Schutzkappe erstreckt sich im Bereich der Montageöffnung durch einen in der Montageöffnung fixierten Dichtungsgummi hindurch, der gegen die äußere Umfangsfläche der Schutzkappe anliegt. Weiter ist die Schutzkappe an ihrem vom Wischerantrieb abgewandten Stirnende mit einer umlaufenden Staublippe versehen, die ein Eindringen von Schmutz in die Schutzkappe verhindert.

Wenn die Schutzkappe bei der Montage des Wischerantriebs zum Beispiel infolge einer extremen Toleranzlage einseitig gegen den in die Montageöffnung eingesetzten Dichtungsgummi gedrückt wird, wirkt eine radiale Kraft auf die Schutzkappe ein. Da die Schutzkappe nur im Bereich der Ringdichtung und im Bereich der leicht verformbaren, wenig Widerstand bietenden Staublippe gegen die Wischerwelle anliegt, wird die in die Schutzkappe integrierte Ringdichtung durch die über die Ringdichtung in die Wischerwelle eingeleiteten radialen Kraft einseitig belastet. Dies wiederum führt zu einem einseitigen Verschleiß der Ringdichtung, was deren Nutzlebensdauer verkürzt und ein Eindringen von Feuchtigkeit an der Ringdichtung vorbei ins Innere des Kraftfahrzeugs zur Folge haben kann.

Dokument DE-A-10331854 offenbart eine Schutzkappe und Wischerantrieb gemäß den Oberbegriffen der Ansprüche 1 und 13.

### Vorteile der Erfindung

Die erfindungsgemäße Schutzkappe mit den Merkmalen des Anspruchs 1 und der erfindungsgemäße Wischerantrieb mit den Merkmalen des Anspruchs 13 haben demgegenüber den Vorteil, dass auf die Schutzkappe einwirkende radiale Kräfte über das zusätzliche Stützlager in die Wischerwelle eingeleitet werden, so dass eine einseitige Belastung der Ringdichtung und damit ein Verschleiß derselben vermieden werden kann.

Das zusätzliche Stützlager ist vorzugsweise zwischen der Staublippe und der Ringdichtung angeordnet, kann jedoch auch auf der von der Staublippe abgewandten Seite der Ringdichtung angeordnet sein.

Um das zusätzliche Stützlager entlang der vorgegebenen Länge der Schutzkappe unterzubringen, grenzt dieses vorzugsweise direkt an die Ringdichtung an, während es von der Staublippe zweckmäßig einen kleinen Abstand aufweist, da sonst eine ausreichende Nachgiebigkeit der Staublippe nicht gewährleistet werden kann.

Gemäß einer ersten Erfindungsaltemative besteht das Stützlager aus einem um die Durchtrittsöffnung herum in eine komplementäre Querschnittserweiterung der Schutzkappe eingesetzten separaten Lagerelement aus einem unnachgiebigen starren Material, vorzugsweise aus einem korrosionsbeständigen, als Lager für die Wischerwelle geeigneten Material, wie beispielsweise Sinterbronze oder ölgetränktem Sinterstahl, so dass sich die Schutzkappe über das Stützlager auf der sich drehenden Wischerwelle abstützen kann und auftretende radiale Kräfte ohne eine Verformung der Schutzkappe über das Stützlager in die Wischerwelle eingeleitet werden können.

Die zur Aufnahme des Lagerelements dienende Querschnittserweiterung der Durchtrittsöffnung ist zweckmäßig zu einer angrenzenden, die Ringdichtung aufnehmenden größeren inneren Ausnehmung der Schutzkappe hin offen, so dass das Lagerelement vor der Ringdichtung von der zum Wischerantrieb benachbarten Seite her entlang der Durchtrittsöffnung in die Schutzkappe eingesetzt werden kann.

Eine zweite Erfindungsvariante sieht dagegen vor, dass das Stützlager einen integralen Teil der Schutzkappe bildet, der sich ebenso wie das zuvor genannte Lagerelement über eine zur Abstützung bzw. Kraftübertragung ausreichende axiale Länge der Schutzkappe erstreckt, vorzugsweise mindestens über eine Länge von etwa 5 bis 10 mm, und mit seiner inneren Umfangsfläche gegen die benachbarte äußere Umfangsfläche der Wischerwelle anliegt.

### Zeichnung

Die Erfindung wird nachfolgend in drei Ausführungsbeispielen anhand der zugehörigen Zeichnungen näher erläutert. Es zeigen:
- Fig. 1: eine teilweise geschnittene Seitenansicht eines Teils einer Heckscheibenwischanlage eines Kraftfahrzeugs mit einer auf die Wischerwelle des Wischerantriebs aufgeschobenen Schutzkappe;
- Fig. 2: eine vergrößerte Schnittansicht eines Teils des Wischeran- triebs und der Schutzkappe;
- Fig. 3: eine vergrößerte Schnittansicht eines Teils einer Wischerwelle mit einer alternativen Schutzkappe.
- Fig. 4: eine vergrößerte Schnittansicht eines Teils einer Wischerwelle mit einer anderen alternativen Schutzkappe.

### Beschreibung der Ausführungsbeispiele

Die in der Zeichnung nur teilweise dargestellte, zur Reinigung einer Heckscheibe 2 eines Personenkraftwagens dienende Heckscheibenwischanlage 4 besteht im Wesentlichen aus einem im Inneren des Personenkraftwagens untergebrachten Wischerantrieb 6, dessen Wischerwelle 8 durch eine Montageöffnung 9 in der Heckscheibe 2 (oder aus einem Karosserieaußenblech) aus dem Personenkraftwagen heraus zur Außenseite der Heckscheibe 2 geführt ist, sowie einem außerhalb des Personenkraftwagens in bekannter Weise drehfest und lösbar auf dem freien Ende der Wischerwelle 8 befestigten Wischerarm (nicht dargestellt).

Der Wischerantrieb 6 umfasst ebenfalls in bekannter Weise einen Gleichstrom-Wischermotor (nicht dargestellt), sowie ein daran angeflanschtes Untersetzungsgetriebe 10, dessen Abtriebswelle die Wischerwelle 8 bildet.

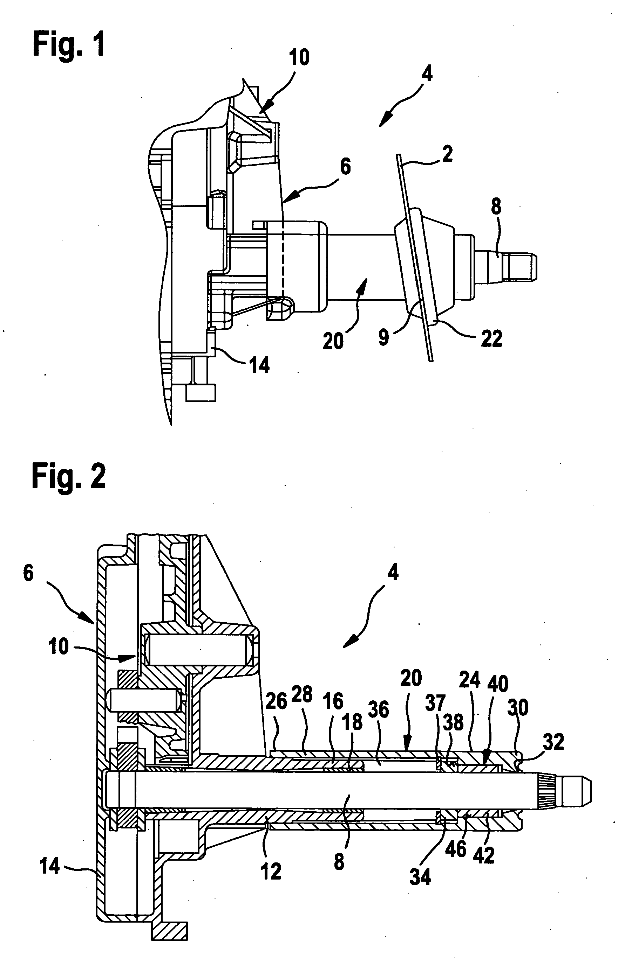

Wie am besten in Fig. 2 dargestellt, erstreckt sich die Wischerwelle 8 durch einen röhrenförmigen Stutzen 12 aus dem Getriebe 10 heraus, der an einem Getriebegehäuse 14 des Untersetzungsgetriebes 10 angeformt und in seinem freien Stirnende 16 mit einem gegen die Umfangsfläche der Wischerwelle 8 anliegenden Sinterlager-(Lagerelement) 18 versehen ist.

Um das Eindringen von Feuchtigkeit entlang der Wischerwelle 8 ins Innere des Personenkraftwagens zu verhindern, ist der Wischerantrieb 6 mit einer auf die Wischerwelle 8 aufgesteckten bzw. aufgeschobenen Schutzkappe 20 versehen, die eine in die Montageöffnung 9 eingesetzte, mit einem Durchlass für die Schutzkappe 20 versehene Gummidichtung (Grommet) 22 durchsetzt.

Wie am besten in Fig. 2 dargestellt, weist die zum Beispiel durch Spritzgießen aus Kunststoff hergestellte Schutzkappe 20 eine zylindrische Umfangsfläche 24 auf, die eine Anlagefläche für die in die Montageöffnung 9 eingesetzte Gummidichtung 22 (Fig. 1) bildet. Die Schutzkappe 20 besitzt ein offenes antriebsseitiges Stirnende 26 und eine zu diesem Stirnende 26 hin dünner werdende Umfangswand 28, die fest auf eine äußere konische Umfangsfläche des Stutzens 12 aufgesteckt ist und kraft- bzw. reibschlüssig auf diesem festgehalten wird. Das teilweise geschlossene entgegengesetzte Stirnende 30 der Schutzkappe 20 weist eine Austrittsöffnung für die Wischerwelle 8 auf, die von einer umlaufenden, gegen die Umfangsfläche der Wischerwelle 8 anliegenden Staublippe 32 begrenzt wird.

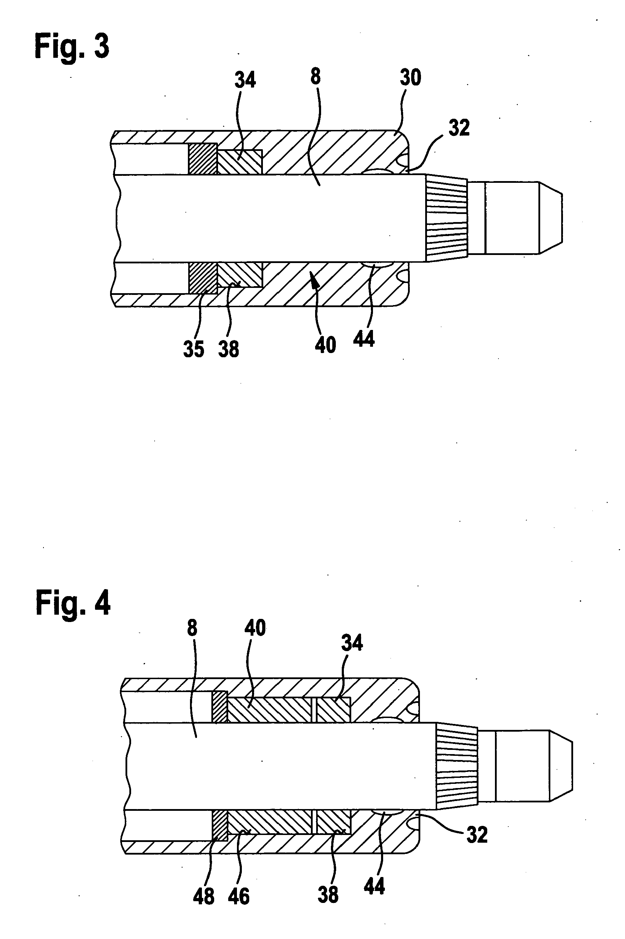

Zwischen dem freien Stirnende 16 des Stutzens 12 und der Staublippe 32 ist eine Ringdichtung 34 in eine in der Schutzkappe 20 ausgesparte Durchtrittsöffnung 36 für die für Wischerwelle 8 eingesetzt. Die Ringdichtung 34 liegt gegen die zylindrische Umfangsfläche der Wischerwelle 8 an und wird von einer eingepressten, eingeclipsten oder verstemmten Stahlscheibe 48 (Fig. 4), einem ultraschallverschweißten Kunststoffring 35 (Fig. 3) oder einem Sicherungsring 37 (Fig. 2) in einer zum Stirnende 26 der Schutzkappe 20 hin offenen Ausnehmung 38 mit reduziertem Innendurchmesser festgehalten.

Um eine einseitige Belastung der Ringdichtung 34 und damit einen ungleichmäßigen Verschleiß derselben zu vermeiden, was beispielsweise bei einem verspannten Einbau der Wischerwelle 8 mit der Schutzkappe 20 und einem dadurch verursachten einseitigen Druck der Gummidichtung 22 auf die Umfangsfläche 24 der Schutzkappe hervorgerufen werden kann, ist die Schutzkappe 20 zwischen der Ringdichtung 34 und der Staublippe 32 mit einem Stützlager 40 versehen, das in diesem Bereich für eine bessere Abstützung der Schutzkappe 20 auf der Wischerwelle 8 sorgt und einseitig auf die Schutzkappe 20 aufgebrachte Kräfte in die Wischerwelle 8 überträgt.

Bei der in Fig. 2 dargestellten Schutzkappe 20 besteht das Stützlager 40 aus einem separaten ring- oder hülsenförmigen Lagerelement 42, das in eine an die Ringdichtung 34 angrenzende, zur Ausnehmung 38 hin offene Querschnittserweiterung 46 eingesetzt ist. Die Querschnittserweiterung 46 weist einen zum Querschnitt des Lagerelements 42 komplementären Querschnitt auf und kann ggf. einen etwas kleineren Durchmesser als die Ausnehmung 38 für die Ringdichtung 34 aufweisen.

Das Lagerelement 42 besteht aus einem einstückig ausgebildeten Ringkörper, zum Beispiel aus Sinterbronze oder ölgetränktem Sinterstahl, dessen Innendurchmesser geringfügig größer als der Außendurchmesser der Wischerwelle 8 ist, und liegt mit seinem inneren Umfang gegen den äußeren Umfang der rotierenden Wischerwelle 8 an.

Bei der in Fig. 3 dargestellten Schutzkappe 20 ist das Stützlager 40 einstückig mit der Schutzkappe 20 ausgebildet, das heißt es bildet zwischen der Staublippe 32 und der Ringdichtung 34 einen integralen Teil der Schutzkappe 20, der sich über eine gewisse Mindestlänge von etwa 5 bis 10 mm erstreckt und wie das zuvor beschriebene Stützelement 42 einen im Vergleich zum Außendurchmesser der Wischerwelle 8 geringfügig größeren Innendurchmesser aufweist.

Zwischen dem Stützlager 40 und der Staublippe 32 weist die Durchtrittsöffnung 36 der Schutzkappe 20 noch eine kleine Querschnittserweiterung auf, die sich bei der Schutzkappe 20 aus Fig. 2 von der Querschnittserweiterung in Richtung der Staublippe 32 konisch verjüngt und bei der Schutzkappe 20 aus Fig. 3 von einer umlaufenden Nut 44 zwischen dem integralen Stützlager 40 und der Staublippe 32 gebildet wird. Die Nut 44 wird zweckmäßig so ausgebildet, dass sie als Fettkammer dient.

Bei der in Fig. 4 dargestellten Schutzkappe 20 besteht das Stützlager 40 wie bei der Schutzkappe 20 aus Fig. 2 aus einem in eine Ausnehmung 46 der Schutzkappe 20 eingesetzten starren Lagerelement 42, jedoch ist dieses auf der von der Staublippe 32 abgewandten Seite der Ringdichtung 34 angeordnet, wobei es auf seiner von der Ringdichtung 34 abgewandten Seite von der in die Schutzkappe eingepressten oder eingeclipsten Stahlscheibe 48 gehalten wird. Der Durchmesser der Querschnittserweiterung 46 entspricht hier dem Durchmesser der Ausnehmung 38.

## Patentansprüche

1. Schutzkappe für eine von einem Wischerantrieb angetriebene Wischerwelle einer Scheibenwischanlage, insbesondere einer Heckscheibenwischanlage eines Kraftfahrzeugs, mit einer Durchtrittsöffnung für die Wischerwelle, mit einer in die Durchtrittsöffnung eingesetzten Ringdichtung, sowie mit einer umlaufenden Staublippe an dem vom Wischerantrieb abgewandten Stirnende, **gekennzeichnet durch** ein Stützlager (40) zur Abstützung der Schutzkappe (20) auf einer Umfangsfläche der Wischerwelle (8).

2. Schutzkappe nach Anspruch 1, **dadurch gekennzeichnet, dass** das Stützlager (40) zwischen der Staublippe (32) und der Ringdichtung (34) angeordnet ist.

3. Schutzkappe nach Anspruch 1, **dadurch gekennzeichnet, dass** das Stützlager (40) auf der von der Staublippe (32) abgewandten Seite der Ringdichtung (34) angeordnet ist.

4. Schutzkappe nach einem der vorangehenden Ansprüche, **dadurch gekennzeichnet, dass** das Stützlager (40) an die Ringdichtung (34) angrenzt.

5. Schutzkappe nach einem der vorangehenden Ansprüche, **dadurch gekennzeichnet, dass** sich das Stützlager (40) über eine Länge vom mindestens 5 bis 10 mm erstreckt.

6. Schutzkappe nach einem der vorangehenden Ansprüche, **dadurch gekennzeichnet, dass** das Stützlager (40) ein um die Wischerwelle (8) herum in die Schutzkappe (20) eingesetztes ringförmiges Lagerelement (42) aus einem starren Material umfasst.

7. Schutzkappe nach Anspruch 6, **dadurch gekennzeichnet, dass** das Lagerelement (42) aus einem korrosionsbeständigen Material besteht.

8. Schutzkappe nach Anspruch 6 oder 7, **dadurch gekennzeichnet, dass** das Lagerelement (42) aus einem Sintermetall besteht.

9. Schutzkappe nach einem der Ansprüche 6 bis 8, **dadurch gekennzeichnet, dass** das Lagerelement (42) in eine zur Ringdichtung (34) hin offene Querschnittserweiterung (46) eingesetzt ist.

10. Schutzkappe nach einem der Ansprüche 1 bis 5, **dadurch gekennzeichnet, dass** das Stützlager (40) einen integralen Teil der Schutzkappe (20) bildet.

11. Schutzkappe nach einem der vorangehenden Ansprüche, **gekennzeichnet durch** eine zwischen der Staublippe (32) und dem Stützlager (40) angeordnete, als Fettkammer dienende umlaufende Nut (44).

12. Schutzkappe nach einem der vorangehenden Ansprüche, **gekennzeichnet durch** Mittel (26, 28) zum kraft- und/oder formschlüssigen Verbinden mit dem Wischerantrieb (6).

13. Wischerantrieb für eine Scheibenwischanlage, insbesondere für eine Heckscheibenwischanlage eines Kraftfahrzeugs, umfassend eine Wischerwelle und eine auf die Wischerwelle aufgeschobene Schutzkappe, die in der Nähe ihres einen Stirnendes kraft- und/oder formschlüssig mit dem Wischerantrieb verbunden ist, an ihrem anderen Stirnende eine Staublippe aufweist, und zwischen ihren beiden Stirnenden mit einer gegen die Umfangsfläche der Wischerwelle anliegenden Ringdichtung versehen ist, **dadurch gekennzeichnet, dass** die Schutzkappe (20) zwischen der Staublippe (32) und der Ringdichtung (34) ein Stützlager (40) zur Abstützung der Schutzkappe (20) auf der Umfangsfläche der Wischerwelle (8) aufweist.

## Claims

1. Protective cap for a wiper shaft which is driven by a wiper drive and belongs to a window wiper system, in particular a rear window wiper system of a motor vehicle, with a passage opening for the wiper shaft, with an annular seal inserted into the passage opening, and with an encircling dust lip on the end facing away from the wiper drive, **characterized by** a supporting bearing (40) for supporting the protective cap (20) on a circumferential surface of the wiper shaft (8).

2. Protective cap according to Claim 1, **characterized in that** the supporting bearing (40) is arranged between the dust lip (32) and the annular seal (34).

3. Protective cap according to Claim 1, **characterized in that** the supporting bearing (40) is arranged on that side of the annular seal (34) which faces away from the dust lip (32).

4. Protective cap according to one of the preceding claims, **characterized in that** the supporting bearing (40) is adjacent to the annular seal (34).

5. Protective cap according to one of the preceding claims, **characterized in that** the supporting bearing (40) extends over a length of at least 5 to 10 mm.

6. Protective cap according to one of the preceding claims, **characterized in that** the supporting bearing (40) comprises an annular bearing element (42) which is inserted into the protective cap (20) about the wiper shaft (8) and is composed of a rigid material.

7. Protective cap according to Claim 6, **characterized in that** the bearing element (42) is composed of a corrosion-resistant material.

8. Protective cap according to Claim 6 or 7, **characterized in that** the bearing element (42) is composed of a sintered metal.

9. Protective cap according to one of Claims 6 to 8, **characterized in that** the bearing element (42) is inserted into a cross-sectional expanded portion (46) which is open towards the annular seal (34).

10. Protective cap according to one of Claims 1 to 5, **characterized in that** the supporting bearing (40) forms an integral part of the protective cap (20).

11. Protective cap according to one of the preceding claims, **characterized by** an encircling groove (44) which is arranged between the dust lip (32) and the supporting bearing (40) and serves as a grease chamber.

12. Protective cap according to one of the preceding claims, **characterized by** means (26, 28) for the frictional and/or form-fitting connection to the wiper drive (6).

13. Wiper drive for a window wiper system, in particular for a rear window wiper system of a motor vehicle, comprising a wiper shaft and a protective cap which is pushed onto the wiper shaft, is connected in the vicinity of its one end in a frictional and/or form-fitting manner to the wiper drive, has a dust lip at its other end and is provided between its two ends with an annular seal which bears against the circumferential surface of the wiper shaft, **characterized in that** the protective cap (20) has, between the dust lip (32) and the annular seal (34), a supporting bearing (40) for supporting the protective cap (20) on the circumferential surface of the wiper shaft (8).

## Revendications

1. Coiffe de protection pour un arbre d'essuie-glace entraîné par un entraînement d'essuie-glace d'une installation d'essuie-glace, en particulier d'une installation d'essuie-glace de vitre arrière d'un véhicule automobile, avec une ouverture traversante pour l'arbre d'essuie-glace, avec une bague d'étanchéité insérée dans l'ouverture de passage, ainsi qu'avec une lèvre anti-poussière circonférentielle sur l'extrémité frontale opposée à l'entraînement d'essuie-glace, **caractérisée par** un palier de support (40) pour supporter la coiffe de protection (20) sur une surface périphérique de l'arbre d'essuie-glace (8).

2. Coiffe de protection selon la revendication 1, **caractérisée en ce que** le palier de support (40) est disposé entre la lèvre anti-poussière (32) et la bague d'étanchéité (34).

3. Coiffe de protection selon la revendication 1, **caractérisée en ce que** le palier de support (40) est disposé du côté de la bague d'étanchéité (34) opposé à la lèvre anti-poussière (32).

4. Coiffe de protection selon l'une quelconque des revendications précédentes, **caractérisée en ce que** le palier de support (40) est adjacent à la bague d'étanchéité (34).

5. Coiffe de protection selon l'une quelconque des revendications précédentes, **caractérisée en ce que** le palier de support (40) s'étend sur une longueur d'au moins 5 à 10 mm.

6. Coiffe de protection selon l'une quelconque des revendications précédentes, **caractérisée en ce que** le palier de support (40) comprend un élément de palier (42) de forme annulaire en matériau rigide, inséré dans la coiffe de protection (20) tout autour de l'arbre d'essuie-glace (8).

7. Coiffe de protection selon la revendication 6, **caractérisée en ce que** l'élément de palier (42) se compose d'un matériau résistant à la corrosion.

8. Coiffe de protection selon la revendication 6 ou 7, **caractérisée en ce que** l'élément de palier (42) se compose d'un métal fritté.

9. Coiffe de protection selon l'une quelconque des revendications 6 à 8, **caractérisée en ce que** l'élément de palier (42) est inséré dans un élargissement de section transversale (46) ouvert vers la bague d'étanchéité (34).

10. Coiffe de protection selon l'une quelconque des revendications 1 à 5, **caractérisée en ce que** le palier de support (40) fait partie intégrante de la coiffe de protection (20).

11. Coiffe de protection selon l'une quelconque des revendications précédentes, **caractérisée par** une rainure (44) circonférentielle, servant de chambre grasse, disposée entre la lèvre anti-poussière (32) et le palier de support (40).

12. Coiffe de protection selon l'une quelconque des revendications précédentes, **caractérisée par** des moyens (26, 28) pour la connexion par engagement par force et/ou par correspondance géométrique à l'entraînement d'essuie-glace (6).

13. Entraînement d'essuie-glace pour une installation d'essuie-glace, en particulier une installation d'essuie-glace de vitre arrière d'un véhicule automobile, comprenant un arbre d'essuie-glace et une coiffe de protection enfoncée sur l'arbre d'essuie-glace, qui est connectée à proximité de l'une de ses extrémités frontales par engagement par force et/ou par correspondance géométrique à l'entraînement d'essuie-glace, qui présente à son autre extrémité frontale une lèvre anti-poussière et qui est pourvu entre ses deux extrémités frontales d'une bague d'étanchéité s'appliquant contre la surface périphérique de l'arbre d'essuie-glace, **caractérisé en ce que** la coiffe de protection (20) présente un palier de support (40) pour supporter la coiffe de protection (20) sur la surface périphérique de l'arbre d'essuie-glace (8) entre la lèvre anti-poussière (32) et la bague d'étanchéité (34).
